# EUROPEAN PATENT SPECIFICATION

(11) **EP 0 762 548 B1**
(45) Date of publication and mention of the grant of the patent: **15.03.2000**
(21) Application number: 96113948.2
(22) Date of filing: 30.08.1996
(51) Int. Cl.: H01R 9/24, B60R 16/02, H02B 3/00

(54) **An electrical connection box and a device for cutting a wire used to form internal circuits of the electrical connection box**
Elektrische Anschlussdose und Schneidvorrichtung für einen Draht, der zur Herstellung von internen Stromkreisen in einer elektrischen Anschlussdose verwendet wird
Boîte de raccordement électrique et dispositif de coupage d'un fil utilisé pour la réalisation des circuits internes d'une telle boîte de raccordement électrique

(30) Priority: 31.08.1995 JP 22368495
(43) Date of publication of application: 12.03.1997
(73) Proprietor: SUMITOMO WIRING SYSTEMS, LTD., Yokkaichi City Mie 510 (JP)
(72) Inventor: Saka, Yuuji, Yokkaichi-City, Mie, 510 (JP); Inoue, Nori, Yokkaichi-City, Mie, 510 (JP); Onizuka, Takahiro, Yokkaichi-City, Mie, 510 (JP); Oka, Yoshito, Yokkaichi-City, Mie, 510 (JP); Matsuoka, Hideo, Yokkaichi-City, Mie, 510 (JP)
(74) Representative: Müller-Boré & Partner Patentanwälte

(56) References cited:
- GB-A- 2 264 885
- PATENT ABSTRACTS OF JAPAN vol. 017, no. 680 (E-1476), 14 December 1993 & JP 05 227631 A (YAZAKI CORP), 3 September 1993,

## Description

The present invention relates to a device for cutting a wire used to form internal circuits of an electrical connection box and is particularly designed to, in a wiring circuit which forms internal circuits of an electrical connection box by a wire and cramping terminals, cut a continuous strand of wire directly laid on a casing or an insulation plate of an electrical connection box and to easily remove a cut wire portion.

In order to easily respond to a design change of internal circuits of an electrical connection box, it has been a practice to form internal circuits by wires and cramping terminals instead of by busbars formed by punching a conductive metal plate. The cramping terminals are mounted to connect the wires with external output terminals and also to connect the wires.

According to one general method for laying and cutting a wire used to form the internal circuit (as described e.g. in JP-A-5-260629), after a continuous strand of wire is laid from a starting point to an end point, a cutting blade is moved downward in the vertical direction, similar to a metal press, to cut a wire, thereby separating circuits. A similar device is known from JP 5-227631 which discloses a mutually connected assembly in which a cable can be cut at specified locations to change a circuit. The assembly comprises an insulating support on which pressure bonding terminals are arranged and pressure bonding a cable. At a position where the cable has to be cut a cable holding groove is provided between two pressure bonding terminals. The cable is cut in the middle between the two pressure bonding terminals by a cutting device having a single blade moving downwardly. Further the cutting device comprises bending means which bend the ends of the cut cable downwardly into the cable holding groove. Thereby the ends are press-fitted into the holding groove so that they are held spaced from each other.

This cutting device and the corresponding method have the disadvantage that it is difficult to cut out a specified section of the cable, as in this case two cuts spaced from each other are required. Therefore, this known cutting device has to carry out successively two independent cutting operations. This results in a more complicated and time consuming production process.

According to another general wire laying/cutting method, a wire is laid while being cut for each circuit.

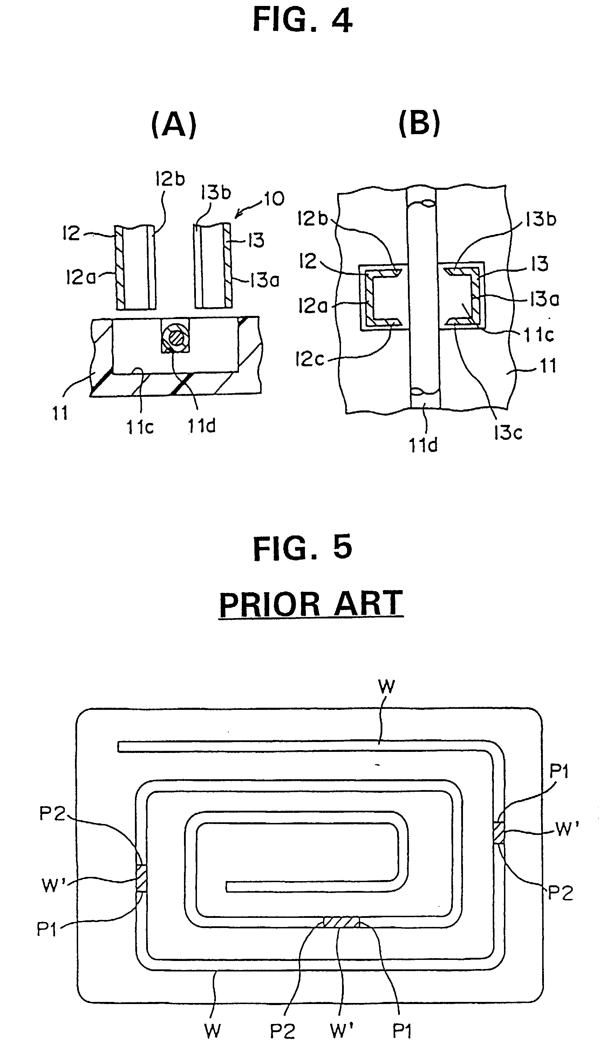

According to the former prior art method, a scrap wire portions W' indicated by hatched portions in FIG. 5 have to be removed by cutting their opposite ends P1, P2. However, in the case that the wire is directly laid on a casing or an insulation plate of the electrical connection box, the scrap wire portions W' cannot be cut and caused to fall down since a wire laying plane is flat. Further, an attempt to securely cut off the scrap wire portions W' is likely to end up with a damage of the wire laying plane, and it is accordingly difficult to securely cut.

In view of the above, a convention practice is such that a strand of wire is cut for each circuit by a cutting blade after being laid in a wire laying mold, and then the laid wire is transferred to the casing or the insulation plate of the electrical connection box. However, in such a case, work efficiency is poor because of an additional operation step of transferring the wire to the casing or the insulation plate, and a production cost is increased because of the need for the wire laying mold.

On the other hand, according to the latter method, the wire W can be directly laid on the casing or the insulation plate of the electrical connection box since it is cut for each circuit while being laid. However, the wire laying and the wire cutting need to be repeated for each circuit. This leads to a poor operability, a longer time to form the internal circuits, and a poor productivity.

It is the object of the invention to provide an improved device for cutting a wire laid in and/or on a wire laying surface (S) of an electrical connection box and an improved method for producing an electrical connection box, which allow a simplified cutting of the wires and a simplified production of the electrical connection box.

This object is fulfilled by a device having the features disclosed in claim 1 and a method having the features disclosed in claim 6. Preferred embodiments are defined in the respective subclaims.

An electrical connection box in which at least one continuous strand of wire used to form internal circuits of the electrical connection box is laid in and/or on a wire laying surface, and the internal circuits are formed by cutting the wire in desired positions with a cutting device, comprises: a wire laying portion for laying the wire on the wire laying surface, and a recess which is lowered from the wire laying plane or surface and formed in a position substantially corresponding to each scrap portion of the wire to be cut off, the recess being widened to have such a width as to permit insertion of cutter members of the cutting device therein.

According to a preferred embodiment, the wire laying surface is or is defined by or lays on an upper casing, a lower casing, and/or an insulation plate.

Preferably, the wire laying surface corresponds to the bottom surface of a wire laying groove and/or between guide projections formed in and/or on the electrical connection box.

According to the invention there is provided a device for cutting a wire laid in and/or on a wire laying surface of an inventive electrical connection box in desired positions to form circuits, comprising: cutter members, which are opposed to each other and arrangeable at opposite sides of a scrap portion of the wire, the cutter members each comprising a connection portion, first and second cutting blades projecting from opposite longitudinal ends of the connection portion being opposite to each other along the longitudinal direction of the wire toward the wire in a direction under an angle, preferably substantially normal to the longitudinal direction of the wire.

Preferably, the connection portions extend substantially in parallel with the longitudinal direction of the wire.

Further preferably, the pairs of first and second cutting blades are arrangeable at opposite sides of the wire and movable toward the wire to cut one end of the scrap portion by the pair of first cutting blades and the other end thereof by the pair of second cutting blades.

Still further preferably, the respective cutter members arrangeable at the opposite sides of the wire each comprise a scrap receiving plate for receiving a cut scrap portion, wherein most preferably a space is at least partially enclosed by the scrap receiving plates substantially defining the bottom enclosure of the space, by the first and second cutting blades and by the connection portion when the cutter members are in a joined state, wherein the scrap receiving plates preferably projects from the respective bottom faces of the connection portions.

Most preferably, the device further comprises a scrap wire disposal means comprising in particular sucking means for the disposal or elimination of the scrap wire portion.

According to the invention there is further provided a method for producing an electrical connection box using the inventive device, comprising the following steps:
arranging at least one wire on a wire laying surface of the electrical connection box;
positioning cutter members of at least one pair of cutter members on opposing sides of the wire at a scrap portion of the wire; and
approaching or substantially joining the cutter members to cut the wire,
and preferably further comprising at least one of the following steps:
arranging the cutter members such that they project at least partly inside at least one recess being lowered from the wire laying surface;
removing the scrap wire portion in particular by applying an underpressure and/or by lifting the scrap portion by means of scrap receiving means;
inserting the wire in holding projections formed on the wire laying surface.

According to a preferred embodiment there is provided an electrical connection box in which a continuous strand of wire used to form internal circuits of the electrical connection box is laid on an upper casing, a lower casing, and/or an insulation plate, and the internal circuits are formed by cutting the wire in desired positions, comprising:
a wire laying groove or pairs of guide projections for laying the wire on the upper casing, the lower casing and/or the insulation plate,
the wire being laid along a wire laying plane which is the bottom surface of the wire laying groove or between the guide projections, and
a recess which is lowered from the wire laying plane and
formed in a position corresponding to each scrap portion of the wire to be cut off, the recess being widened to have such a width as to permit insertion of cutter members therein.

In the electrical connection box thus constructed, the cut scrap wire portion is permitted to fall down to the bottom surface of the recess because the recess is lowered from the wire laying plane. Further, since the recess has such a width as to allow insertion of the cutter members therein, the cutting operation can be easily performed.

As is clear from the above description, since the recess lowered from the wire laying plane is formed, the wire can be securely cut and caused to fall down by moving the pair of cutter members toward each other after locating the leading ends of the cutter members in the recess.

Further, according to a further embodiment of the invention there is provided a device for cutting the wire laid in the wire laying groove or between the guide projections of the inventive electrical connection box in desired positions to form circuits, comprising:
cutter members each comprising a connection portion extending in parallel with the longitudinal direction of the wire, first and second cutting blades projecting from opposite widthwise ends of the connection portion toward the wire in a direction normal to the longitudinal direction of the wire, wherein the cutter members are to be opposed to each other at opposite sides of the scrap portion of the wire, and the pairs of first and second cutting blades are to be located at opposite sides of the wire and to be moved toward the wire to cut one end of the scrap portion by the pair of first cutting blades and the other end thereof by the pair of second cutting blades.

With the cutting device thus constructed, after the continuous strand of wire is directly laid on the upper casing, the lower casing and/or the insulation plate from its starting point to its end point by an automatic wire laying apparatus, the cutter members are located at the opposite sides of the scrap wire portion such that the first and second cutting blades are positioned at the opposite ends of the scrap wire portion. Subsequently, the pair of cutter members are moved toward the wire so that one and the other ends of the scrap wire portion are cut from the opposite sides by the pair of first cutting blades and by the pair of second cutting blades, respectively.

Thus, by moving the pair of cutter members toward the wire, the opposite ends of the scrap wire portion can be simultaneously securely cut from the opposite sides and the wire can be separated for each circuit.

Further, with the above cutting device, the pair of cutter members are positioned at the opposite sides of the scrap portion of the continuous strand of wire which is directly laid on the upper casing, the lower casing and/or the insulation plate by the automatic wire laying apparatus, and the opposite ends of the scrap portion can be simultaneously cut off from opposite sides by moving the cutter members toward each other. Accordingly, even the wire directly laid on the electrical connection box can be securely cut for each circuit. Thus, a wire laying mold which is necessary with the prior art cutting device can be dispensed with, reducing a production cost.

Preferably, the respective cutter members located at the opposite sides of the wire comprises each a scrap receiving plate which defines the bottom end of a space enclosed by the first and second cutting blades and the connection portion and projects from the bottom face of the connection portion.

With this construction, after the opposite ends of the scrap wire portion are cut by moving the cutter members toward each other, the cut scrap wire portion falls onto the scrap receiving plates. Accordingly, the scrap wire portion can be removed at the same time the cutting device is removed.

In other words, since the cutting device can be formed with the scrap receiving plates for closing the bottom ends of the cutter members, the scrap wire portion, upon being cut, falls onto the scrap receiving plates and is accommodated inside the pair of cutter members. Accordingly, by removing the cutting device accommodating the scrap wire portion, the cut scrap wire portion can be simultaneously removed. Therefore, operability in forming the internal circuits can be further improved.

Also the use of the device for cutting the wire(s) for the production or the assembling of the electrical connection box can be considered as an invention on its own, wherein the device for cutting and the electrical connection box are matched onto each other in such a way to form an inventive set or kit.

These and other objects, features and advantages of the present invention will become more apparent upon a reading of the following detailed description and accompanying drawings in which:
FIGS. 1(A) and 1(B) are a partial section and a plan view partly in section showing a cutting device according to a first embodiment and an electrical connection box,
FIGS. 2(A), 2(B) and 2(C) are sections showing an operation of cutting a wire directly laid on the electrical connection box by the cutting device according to the first embodiment,
FIGS. 3(A) and 3(B) are sections showing an operation of cutting the wire by a cutting device according to a second embodiment,
FIGS. 4(A) and 4(B) are a lateral section and a plan view partly in section of a modification of the electrical connection box, and
FIG. 5 is a plan view showing an example of internal circuits of a prior art electrical connection box.

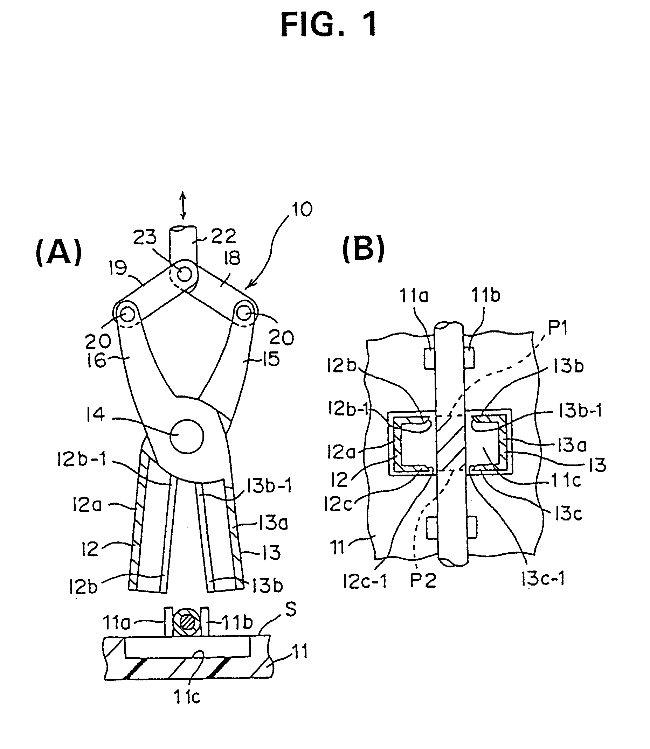

As shown in FIGS. 1(A) and 1(B), a cutting device 10 according to a first embodiment of the invention cuts a continuous strand of wire W which is used to form internal circuits and is laid on a wire lying surface, e.g. an upper casing, a lower casing and/or an insulation plate of an electrical connection box in desired positions to remove unnecessary wire portions, thereby separating the internal circuits from each other. In this embodiment, the wire W is laid on an insulation plate 11.

The cutting device 10 includes a nipper type cutting tool. As shown in FIG. 1(A), operable portions 15, 16 project from the upper ends of a pair of cutter members 12, 13, and are overlapped and rotatably connected by a pin 14 so that the bottom ends of the cutter members 12, 13 can be closed and opened. Arms 18, 19 are rotatably connected with the upper ends of the operable portions 15, 16 by a pin 20. The upper ends of the arms 18, 19 are overlapped, and a movable shaft 22 such as a cylinder movable a direction laying substantially in a plane containing the arms 18, 19, i.e. in the vertical direction in FIG. 1(A) is rotatably connected with the upper ends of the arms 18, 19 by a pin 23.

The cutting device 10 also includes a positioning device (not shown) for holding the cutter members 12, 13 at a specified height with respect to the insulation plate 11. The positioning device is connected with the pin 14 which rotatably connects the operable members 15, 16. By moving the movable shaft 22 upward, the operable members 15, 16 act in a closing direction via the arms 18, 19 to cut the wire W from opposite sides by the cutter members 12, 13.

As shown in FIG. 1(B), the cutter members 12, 13 include connection portions 12a, 13a located substantially in parallel with the longitudinal direction of the wire W, first cutting blades 12b, 13b and second cutting blades 12c, 13c which project toward the wire W along directions substantially normal to the longitudinal direction of the wire W from the opposite widthwise ends of the connection portions 12a, 13a, respectively, i.e. from the front ends of the connection portions 12a, 13a being located opposite to each other with respect to the longitudinal direction of the wire (W). Accordingly, the cutter members 12, 13 are U-shaped in their cross sections, as can be seen in FIG. 1(B).

More specifically, the connection portion 12a of the cutter member 12 has a width substantially equal to the length of a scrap wire portion W' to be cut off (a hatched portion in FIG. 1(B)), and the first and second cutting blades 12b, 12c project from the opposite ends thereof, i.e. the cutting blades 12b, 12c are spaced by a distance corresponding or equal to the length of the scrap wire portion W'. Acute cutting edges 12b-1, 12c-1 are formed at the leading ends of the first and second cutting blades 12b, 12c, respectively toward the wire W. Likewise, the connection portion 13a of the cutter member 13 has a width substantially equal to the length of the scrap wire portion W', and acute cutting edges 13b-1, 13c-1 are formed at the leading ends of the first and second cutting blades 13b, 13c projecting from the opposite ends of the connection portion 13a.

The cutter members 12, 13 are so located as to conform to opposite ends P1, P2 of the scrap wire portion W', and when they are closed, the cutting edges 12b-1 and 13b-1, 12c-1 and 13c-1 are brought substantially into contact with each other, thereby cutting off the scrap wire portion W'.

One or more pairs of guide projections 11a, 11b are formed in desired positions on the insulation plate 11 in conformity with a layout pattern of the wire W, and the wire W is held therebetween. A recess 11c lowered from a wire laying plane or surface S (surface of the insulation plate 11) is formed in a position corresponding to the scrap portion of the wire W. The recess 11c is widened to have such a width as allow insertion of the pair of cutter members 12, 13 therein.

Next, a process of forming internal circuits of the electrical connection box using the above cutting device is described.

First, a continuous strand of wire W is directly laid on the insulation plate 11 from its starting point to its end point by an automatic wire laying apparatus (not shown), such that the opposite sides of the wire W are tightly held by the guide projections 11a, 11b projecting from the insulation plate 11. As a result, the wire W is held onto the insulation plate 11.

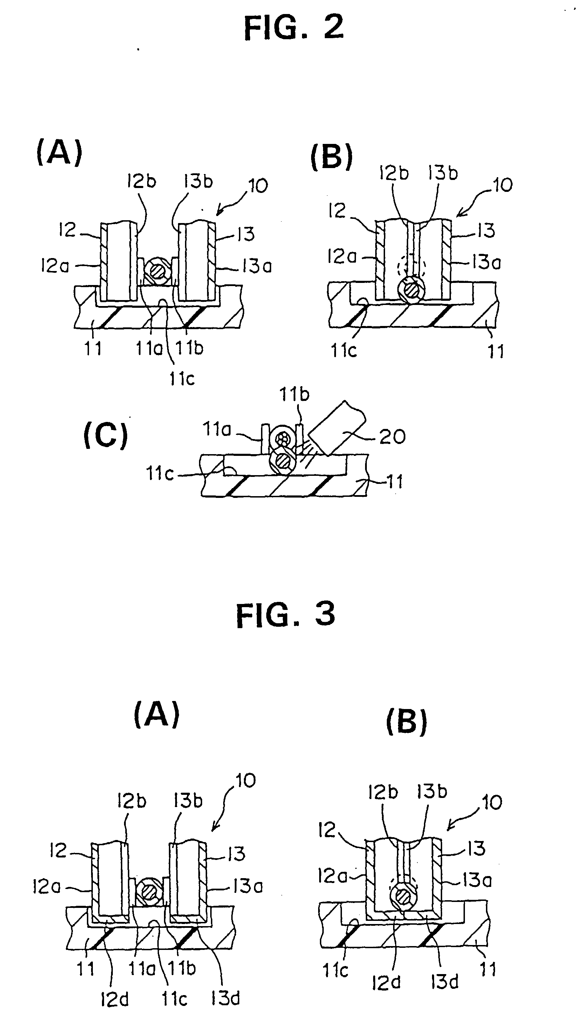

Subsequently, the bottom portions of the cutter members 12, 13 of the cutting device 10 are inserted into the opposite sides of the recess 11c of the insulation plate 11 which recess is so formed as to substantially correspond to the scrap portion of the wire W as shown in FIG. 2(A). The cutting blades 12b, 12c of the cutter member 12 are opposed to the cutting blades 13b, 13c of the cutter member 13 with the scrap wire portion W' therebetween at the opposite longitudinal ends of the scrap wire portion W' located above the recess 11c.

Subsequently, the movable shaft 22 of the cutting device 10 is moved upward to move the operable portions 15, 16 toward each other via the arms 18, 19. This causes the pair of cutter members 12, 13 to move toward the scrap wire portion W' in directions normal to the longitudinal direction of the wire portion W'. As a result, as shown in FIG. 2(B), one and the other ends of the scrap wire portion W' are cut from opposite sides by the cutting edges 12b-1, 13b-1 of the first cutting blades 12b, 13b and by the cutting edges 12c-1, 13c-1 of the second cutting blades 12c, 13c, respectively.

Subsequently, as shown in FIG. 2(C), a hose of a suction device (not shown) for generating a negative pressure is located at the recess 11c to remove the cut wire portion W' from the insulation plate 11 by sucking it.

As described above, according to the invention, the opposite ends P1, P2 of the scrap wire portion W' are cut by moving the cutter members 12, 13 toward each other, thereby cutting the continuous strand of wire W for each circuit. Further, since the insulation plate 11 is formed with the recess 11c lowered from the laying plane S of the wire W and the leading ends of the cutter members 12, 13 are inserted into the recess 11c, the scrap wire portion can be securely cut off. Therefore, the internal circuits of the electrical connection box can be efficiently formed.

FIGS. 3(A) and 3(B) show a cutting device 10 according to a second embodiment. This cutting device 10 includes scrap receiving plates 12d, 13d at the bottom ends of the cutter members 12, 13. The scrap receiving plates 12d, 13d project from the bottom face of the connection portions 12a, 13a so as to define the bottom ends of spaces substantially enclosed by the first cutting blades 12b, 13b, the second cutting blades 12c, 13c and the connection portions 12a, 13a, respectively.

With the cutting device 10 according to the second embodiment, as shown in FIG. 3(B), the scrap wire portion W' falls onto the scrap receiving plates 12d, 13d after having its opposite ends cut by moving the cutter members 12, 13 toward each other. Accordingly, the scrap wire portion W' can be removed at the same time the cutting device 10 is removed.

The cutting devices 10 according to the first and second embodiments can be used for an electrical connection box in which a wire W used to form internal circuits is laid in a wire laying groove 11d formed in the insulation plate 11 in accordance with a wire layout pattern as shown in FIGS. 4(A) and 4(B).

In this electrical connection box, the wire laying groove lid is widened, in particular in a direction laying in and/or perpendicular to the wire laying plane or surface S, in a position corresponding to the scrap wire portion so that the cutter members 12, 13 can be inserted therein, and also is deepened to form the recess 11c.

The guide projections or wire laying groove are formed on or in the insulation plate in the foregoing embodiments. However, it should be appreciated that the wire may be cut to separate each circuit using the above cutting devices even in the case the guide projections or wire laying groove are formed on or in an upper casing or a lower casing of the electrical connection box.

## Claims

1. A device for cutting a wire (W) laid in and/or on a wire laying surface (S) of an electrical connection box in desired positions to form circuits, comprising cutter members (12, 13), which are opposed to each other and arrangeable at opposite sides of a scrap portion of the wire (W'),
the cutter members (12, 13) each comprising a connection portion (12a, 13a), first and second cutting blades (12b, 13b, 12c, 13c) projecting from opposite longitudinal ends of the connection portion (12a, 13a) being opposite to each other along the longitudinal direction of the wire (W) toward the wire (W) in a direction under an angle, preferably substantially normal to the longitudinal direction of the wire (W).

2. A device according to claim 1, wherein the pairs of first and second cutting blades (12b 13b, 12c, 13c) are arrangeable at opposite sides of the wire (W) and movable toward the wire (W) to cut one end (P1) of the scrap portion (W') by the pair of first cutting blades (12b, 13b) and the other end (P2) thereof by the pair of second cutting blades (12c, 13c).

3. A device according to claim 1 or 2, wherein the respective cutter members (12, 13) arrangeable at the opposite sides of the wire (W) each comprise a scrap receiving plate (12d, 13d) for receiving a cut scrap portion.

4. A device according to claim 3, wherein a space is at least partially enclosed by the scrap receiving plates (12d, 13d) substantially defining the bottom enclosure of the space, by the first and second cutting blades (12b, 13b, 12c, 13c) and by the connection portion (12a, 13a) when the cutter members (12b, 13b) are in a joined state, wherein the scrap receiving plates (12d, 13d) preferably projects from the respective bottom faces of the connection portions (12a, 13a).

5. A device according to one or more of the preceding claims 1 to 4, wherein the device further comprises a scrap wire disposal means (20) comprising in particular sucking means for the disposal or elimination of the scrap wire portion (W').

6. A method for producing an electrical connection box using a device according to one or more of the preceding claims 1 to 5, comprising the following steps:
arranging at least one wire (W) on a wire laying surface (S) of the electrical connection box;
positioning cutter members (12, 13) of at least one pair of cutter members (12, 13) on opposing sides of the wire (W) at a scrap portion of the wire (W'); and
approaching or substantially joining the cutter members (12, 13) to cut the wire (W).

7. A method according to claim 6, further comprising at least one of the following steps:
arranging the cutter members (12, 13) such that they project at least partly inside at least one recess (11c) being lowered from the wire laying surface (S);
removing the scrap wire portion (W') in particular by applying an underpressure and/or by lifting the scrap portion (W') by means of scrap receiving means (12d, 13d);
inserting the wire (W) in holding projections (11a, 11b) formed on the wire laying surface (S).

## Patentansprüche

1. Vorrichtung zum Schneiden einer Leitung (W), die in und/oder auf eine Leitungslege- bzw. Verdrahtungsoberfläche (S) einer elektrischen Anschlussdose in gewünschte Anordnungen gelegt ist, um Schaltkreise zu bilden, die Schneidglieder (12, 13) umfasst, die einander gegenüberliegen und an gegenüberliegenden bzw. entgegengesetzten Seiten eines Abfallteils (W') der Leitung angebracht werden können, wobei die Schneidglieder (12, 13) jeweils einen Verbindungsteil (12a, 13a), erste und zweite Schneidklingen (12b, 13b, 12c, 13c) umfassen, die von den entgegengesetzten longitudinalen Enden des Verbindungsteils (12a, 13a) vorspringen und sich entlang der Längsrichtung der Leitung (W) zur Leitung (W) hin, in einer Richtung unter einem Winkel, welcher vorzugsweise im wesentlichen normal zur Längsrichtung der Leitung (W) ist, gegenüberliegen.

2. Vorrichtung nach Anspruch 1, wobei die Paare der ersten und zweiten Schneidklingen (12b, 13b, 12c, 13c) an gegenüberliegenden bzw. entgegengesetzten Seiten der Leitung (W) anbringbar und in Richtung zur Leitung (W) hin beweglich sind, um ein Ende (P1) des Abfallstücks (W') mit dem Paar der ersten Schneidklingen (12b, 13b) und das andere Ende davon mit dem Paar der zweiten Schneidklingen (12c, 13c) abzuschneiden.

3. Vorrichtung nach Anspruch 1 oder 2, wobei die entsprechenden Schneidglieder (12, 13), die an entgegengesetzten Seiten der Leitung (W) positioniert werden können, jeweils eine Abfallaufnahmeplatte (12d, 13d) umfassen, um einen abgeschnittenen Abfallteil aufzufangen.

4. Vorrichtung nach Anspruch 3, wobei ein Raum zumindest teilweise durch die Abfallaufnahmeplatten (12d, 13d), die den Bodenabschluss des Raumes im wesentlichen definieren, durch die ersten und zweiten Schneidklingen (12b, 13b, 12c, 13c) und den Verbindungsteil (12a, 13a) umschlossen wird, wenn die Schneidglieder (12b, 13b) in einem zusammengebrachten Zustand sind, wobei die Abfallaufnahmeplatten (12d, 13d) vorzugsweise von den jeweiligen Bodenflächen der Verbindungsteile (12a, 13a) vorspringen.

5. Vorrichtung nach einem oder mehreren der vorangehenden Ansprüche 1 bis 4, wobei die Vorrichtung weiter ein Einrichtung (20) zur Abfall-Leitungsentfernung umfasst, welche im besonderen Saugmittel für die Beseitigung oder Entfernung des Abfall-Leitungsstückes (W') umfasst.

6. Verfahren zur Herstellung einer elektrischen Anschlussdose, unter Verwendung einer Vorrichtung gemäß einem oder mehreren der vorhergehenden Ansprüche 1 bis 5, welches die folgenden Schritte umfasst:
Anordnen mindestens einer Leitung (W) auf einer Leitungslege- bzw. Verdrahtungsoberfläche (S) der elektrischen Anschlussdose;
Anordnen der Schneidglieder (12, 13) mit mindestens einem Paar Schneidglieder (12, 13) an gegenüberliegenden bzw. entgegengesetzten Seiten der Leitung (W) an einem Abfall-Abschnitt (W') der Leitung; und
Annähern oder im wesentlichen Zueinanderbringen der Schneidglieder (12, 13) um die Leitung (W) zu zerschneiden.

7. Verfahren nach Anspruch 6, welches weiter mindestens einen der folgenden Schritte umfasst:
Anordnen der Schneidglieder (12, 13), so daß diese zumindest teilweise in mindestens eine Vertiefung (11c), welche gegenüber der Verdrahtungsoberfläche (S) abgesenkt ist, hineinreichen;
Entfernen des Abfall-Leitungsstückes (W') insbesondere durch Anwendung eines Unterdrucks und/oder durch Anheben des Abfall-Leitungsstückes (W') mit dem eines Abfallaufnahmemittel (12d, 13d);
Einfügen der Leitung (W) in Haltevorsprünge (11a, 11b) welche auf der Verdrahtungsoberfläche (S) geformt wurden.

## Revendications

1. Dispositif destiné à couper un fil (W) encastré à l'intérieur d'une surface d'appui de fil (S) d'un boîtier de connexion électrique et/ou déposé sur celle-ci, dans des positions désirées afin de former des circuits, comprenant des éléments de découpe (12, 13) qui sont opposés l'un à l'autre et peuvent être agencés sur les faces opposées d'une partie formant chute du fil (W'),
les éléments de découpe (12, 13) comprenant chacun une partie de liaison (12a, 13a), des premières et secondes lames de découpe (12b, 13b, 12c, 13c) en saillie par rapport aux extrémités longitudinales opposées des parties de liaison (12a, 13a) opposées l'une à l'autre suivant la direction longitudinale du fil (W), orientées vers le fil (W) dans une direction formant, de préférence, un angle sensiblement perpendiculaire à la direction longitudinale du fil (W).

2. Dispositif selon la revendication 1, dans lequel les paires des premières et secondes lames de découpe (12b, 13b, 12c, 13c) peuvent être agencées sur des côtés opposés du fil (W) et de manière à pouvoir se déplacer vers le fil (W) afin de couper une première extrémité (P1) de la partie formant chute (W') avec la paire des premières lames de découpe (12b, 13b) et l'autre extrémité (P2) de celle-ci avec la paire de secondes lames de découpe (12c, 13c).

3. Dispositif selon la revendication 1 ou 2, dans lequel les éléments de découpe respectifs (12, 13) pouvant être agencés sur les côtés opposés du fil (W) comprennent chacun une plaque de réception de chute (12d, 13d) destinée à recevoir une partie formant chute coupée.

4. Dispositif selon la revendication 3, dans lequel un espace est au moins partiellement entouré par les plaques de réception de chute (12d, 13d) définissant sensiblement l'enceinte inférieure de l'espace, par les premières et secondes lames de découpe (12b, 13b, 12c et 13c) et par la partie de liaison (12a, 13a) lorsque les éléments de découpe (12b, 13b) sont dans un état joint, dans lequel les plaques de réception de chute (12d, 13d) sont, de préférence, en saillie par rapport aux faces inférieures respectives des parties de liaison (12a, 13a).

5. Dispositif selon une ou plusieurs des revendications 1 à 4 précédentes, dans lequel le dispositif comprend, en outre, un moyen de mise au rebut de chute de fil (20) comprenant, en particulier, un moyen d'aspiration destiné au rejet ou à l'élimination de la partie de fil formant chute (W').

6. Procédé de production d'un boîtier de connexion électrique en utilisant un dispositif selon une ou plusieurs des revendications 1 à 5, comprenant les étapes suivantes:
d'agencement d'au moins un fil (W) sur une surface d'appui de fil (S) du boîtier de connexion électrique ;
de positionnement des éléments de découpe (12, 13) d'au moins une paire d'éléments de découpe (12, 13) sur des côtés opposés du fil (W) sur une partie formant chute (W') du fil ; et
de rapprochement ou de mise presque en contact des éléments de découpe (12, 13) de manière à couper le fil (W).

7. Procédé selon la revendication 6, comprenant, en outre, au moins une des étapes suivantes:
d'agencement des éléments de découpe (12, 13) de telle manière qu'ils viennent en saillie au moins partiellement à l'intérieur d'au moins une cavité (11c) qui est située au-dessous de la surface d'appui de fil (S) ;
d'élimination de la partie de fil formant chute (W'), en particulier, par application d'une dépression et/ou par soulèvement de la partie formant chute (W') au moyen d'un moyen de réception de chute (12d, 13d) ;
d'insertion du fil (W) dans des saillies de maintien (11a, 11b) formées sur la surface d'appui de fil (S).
